(19) Europäisches Patentamt
European Patent Office
Office européen des brevets

(11) **EP 3 281 787 A1**

(12) **EUROPEAN PATENT APPLICATION**
published in accordance with Art. 153(4) EPC

(43) Date of publication:
**14.02.2018 Bulletin 2018/07**

(51) Int Cl.:
***B32B 27/00*** *(2006.01)*  ***A47J 27/00*** *(2006.01)*
***H05B 6/12*** *(2006.01)*

(21) Application number: **16776317.6**

(22) Date of filing: **12.02.2016**

(86) International application number:
**PCT/JP2016/054150**

(87) International publication number:
**WO 2016/163148 (13.10.2016 Gazette 2016/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **10.04.2015 JP 2015080882**

(71) Applicant: **Toyo Seikan Group Holdings, Ltd.**
**Shinagawa-ku**
**Tokyo 141-8627 (JP)**

(72) Inventors:
• **FUJITA, Hagino**
**Tokyo 141-8627 (JP)**
• **SAITOU Mitsuyoshi**
**Tokyo 141-8627 (JP)**
• **KURODA, Hitomi**
**Yokohama-shi**
**Kanagawa 240-0062 (JP)**
• **KANAI, Chiaki**
**Tokyo 135-0048 (JP)**

(74) Representative: **J A Kemp**
**14 South Square**
**Gray's Inn**
**London WC1R 5JJ (GB)**

(54) **HEAT RESISTANT LAMINATED SHEET**

(57) A heat-resistant laminated sheet including an electrically conducting sheet 3 and a silicone resin layer 5 of a thickness of not less than 20 $\mu$m formed on one surface of the electrically conducting sheet 3. The sheet has a laminar structure in which a layer of a silicone resin is formed on one surface of a metal foil (electrically conducting sheet), and is suited for use with the IH cooking devices.

**Fig. 1**

EP 3 281 787 A1

## Description

Technical Field:

This invention relates to a heat-resistant laminated sheet in which a silicone resin layer is formed on one surface of an electrically conducting sheet. More specifically, the invention relates to a heat-resistant laminated sheet that can be favorably used as a heat-generating sheet for use with the IH cooking devices that are used for heating and cooking.

Background Art:

Conventional laminates of a structure in which a silicone resin layer is laminated on an aluminum foil can be represented, as described, for example, in patent documents 1 to 3, by an aluminum foil container that is used for heating and cooking by being heated in a microwave oven (patent document 1), an aluminum foil in which foods are packed and are heated (patent document 2) and a container for foods used for baking doughs such as breads (patent document 3).

In these uses, the silicone resin layer laminated on the aluminum foil works to prevent the occurrence of sparks caused by the reflection of microwaves during the heating in the microwave oven and to prevent the heated food from scorching and adhering to the aluminum foil. Here, at the same time, the silicone resin layer has heat resistance to such a degree that it does not deform during the heating, does not melt, and does not separate away from the aluminum foil. The silicone resins having such properties have now been placed in the market by various manufacturers as heat-resistant silicone resins.

In recent years, heat-cooking devices called electromagnetic cooking devices have been widely used to substitute for the gas ovens. The electromagnetic cooking devices are also called IH cooking devices and in which a high-frequency magnetic field is generated by an electromagnetically induced heating coil installed therein, and the materials to be heated such as foods and water contained in the container for cooking placed on the cooking device are heated by the Joule heat generated by the induced eddy currents .

The electromagnetic cooking devices are capable of heating and cooking foods without using flame, and offer such superiorities as high degree of safety, easiness for wiping stains, maintaining cleanness and economy to those of the conventional heat-cooking devices.

Due to their principle, however, limitation is imposed on the electromagnetic cooking devices; i.e., it is necessary to use a dedicated device made of a magnetic material as represented by iron. In recent years, therefore, there have been proposed and put into a practical use a lot of cooking devices and cooking containers made of a material other than the magnetic material. For instance, a patent document 4 is disclosing a cooking container for use with an IH cooking device, the cooking container being made of a plastic material and provided with a heat-generating sheet made of a metal foil such as aluminum foil. As the heat-generating sheet, the patent document 4 is proposing a laminate of a structure obtained by laminating a layer of a thermoplastic resin such as olefin resin on a metal foil such as aluminum foil.

If simply placed on the bottom of the plastic container, however, the heat-generating sheet is not fixed thereto and causes such an inconvenience that it often moves during the heating and cooking (boiling and cooking). Therefore, the heat-generating sheet is fixed by being heat-sealed to the bottom inside the plastic container. Accordingly, the layer of the thermoplastic resin laminated on the metal foil must have heat-sealability to the bottom of the plastic container.

However, the above heat-generating sheet must be adhered and fixed to the bottom of the container and, therefore, is not suited for the disposable use. Besides, a production step is necessary for adhering and fixing the heat-generating sheet to the bottom pf the plastic container. Therefore, the cooking container cannot be produced inexpensively.

The present applicant has, further, developed the function of the above heat-generating sheet, and has previously proposed a heat-generating sheet for IH cooking devices comprising a laminated sheet of an electrically conducting sheet (metal foil) and a dielectric layer formed of an olefin resin (Japanese Patent Application No. 2014-86539). The heat-generating sheet can be folded in the shape of the container. Namely, the container formed by folding the heat-generating sheet (called the container of the heat-generating sheet) is inserted in a holder fitting made of a thermoplastic resin in the shape of the container. Then water and foodstuffs to be boiled and cooked are put into the container of the heat-generating sheet, and, in this state, are heated and cooked by using the IH cooking device.

The above heat-generating sheet has not been fixed by heat-sealing to the holder fitting made of the thermoplastic resin in the shape of the container. However, if the body (metal foil) heated by the inductive heating comes into direct contact with the holder fitting made of the thermoplastic resin, the holder fitting undergoes the thermal deformation causing inconvenience. Therefore, the heat-generating sheet is provided, on one surface of the metal foil, with a layer of a thermoplastic resin such as olefin resin that does not generate the heat of induction.

The layer of the thermoplastic resin has heat resistance to a certain degree. However, if the material to be heated is cooked at a high temperature like the case of frying foods in an edible oil, it becomes necessary to use the heat-generating sheet that is provided, on one surface of the metal foil (on the side that comes in contact with the holder fitting), with the layer of a resin having a higher heat resistance.

From the above point of view, it can be contrived to provide the layer of the silicone resins disclosed in the above patent documents 1 to 3 on one surface of the metal foil which is the heat-generating body. However, the layer of the silicone resin provided on one surface of the metal foil is located on the side where it comes in contact with the materials to be heated, such as foodstuffs that are to be heated and cooked. It is, therefore, desired that the silicone resin layer does not permit the foodstuffs to adhere to it while preventing the reflection of microwaves during the heating in a microwave oven. According to the patent documents 1 to 3, however, the layers of the silicone resins have been formed by thinly applying the silicone resins to meet their use; i.e., the layers have small thicknesses. Therefore, properties required for these layers are altogether different from the properties required for the dielectric layer that must have a high heat resistance being provided on one surface of the metal foil (surface on the side where it does not come in contact with the foodstuffs) that is used as the heat-generating body during the heating and cooking by using the IH cooking device. Therefore, the silicone resin layers of the patent documents 1 to 3 cannot be directly used as the heat-generating sheet for the IH cooking devices.

Prior Art Documents:

Patent Documents:

Patent document 1: JP-A-2003-265312
Patent document 2: JP-A-2006-192744
Patent document 3: JP-A-2002-326691
Patent document 4: JP-A-2014-239852

Outline of the Invention:

Problems that the Invention is to Solve:

It is, therefore, an object of the present invention to provide a heat-resistant laminated sheet that can be favorably used for IH cooking devices, the heat-resistant laminated sheet having a laminar structure in which a layer of a silicone resin is formed on one surface of a metal foil (electrically conducting sheet) and having excellent heat resistance.

Another object of the present invention is to provide a heat-resistant laminated sheet having excellent adhesiveness between the layer of the silicone resin and the electrically conducting sheet.

A further object of the present invention is to provide a heat-resistant laminated sheet which permits the electrically conducting sheet to be provided with cut lines for controlling the eddy currents.

Means for Solving the Problems:

According to the present invention, there is provided a heat-resistant laminated sheet including an electrically conducting sheet and a silicone resin layer of a thickness of not less than 20 $\mu$m formed on one surface of the electrically conducting sheet.

In the heat-resistant laminated sheet of the invention, it is desired that:

(1) The silicon resin layer contains carbon atoms at a ratio that is larger in a region on the side of the interface to the electrically conducting sheet than in a region on the side of the surface thereof;

(2) If represented on the basis of three elements of silicon atoms, oxygen atoms and carbon atoms, the silicone resin layer has an elemental ratio of carbons CD represented by the following formula:

$$CD = C1/C2$$

wherein C1 is an elemental composition ratio (%) of carbon atoms in the silicon resin layer in a region of a depth of 100 to 300 nm from the surface thereof on the side of the electrically conducting sheet,
and C2 is an elemental composition ratio (%) of carbon atoms in the silicon resin layer in a region of a depth of not less than 100 nm from the surface thereof,

of more than 1;

(3) The silicone resin layer has a thickness of 50 to 200 $\mu$m;

(4) The heat-resistant laminated sheet is used as a heat-generating sheet for use with the IH cooking devices;

(5) The electrically conducting sheet is provided with cut lines penetrating through in the direction of thickness of the sheet for controlling eddy currents;

(6) The silicon resin layer includes a silicone sheet and a silicone-applied layer which is formed on the side of the electrically conducting sheet; and

(7) A paper material is adhered to the silicone-applied layer of the silicon resin layer.

Effects of the Invention:

The heat-resistant laminated sheet of the present invention is placed on the bottom of a container (holder fitting) made of a thermoplastic resin. Eddy currents generate in the electrically conducting sheet in the laminated sheet due to the heat induced by the IH cooking device and whereby the cooking can be executed by utilizing the Joule heat. Here, a high degree of heat resistance is exhibited by the silicone resin layer that is positioned between the electrically conducting sheet that generates the heat and the bottom of the thermoplastic resin container (holder fitting). Therefore, the heat-resistant laminated sheet of the present invention exhibits excellent heat resistance when it is used as the heat-generating sheet for IH cooking devices, is inexpensive and is suited for a disposable use where it is disposed of after used for heating and cooking. Besides, the heat-resistant laminated sheet makes it possible to effectively prevent the thermoplastic resin container from being thermally deformed when the heat-resistant laminated sheet is used being folded as the heat-generating sheet.

In the heat-resistant laminated sheet of the invention, further, the electrically conducting sheet is provided with cut lines for controlling eddy currents to thereby lower or shut off the induction of eddy currents. When the heat-resistant laminated sheet is folded to form the thermoplastic resin container, therefore, heat is prevented from being excessively generated in the circumferential wall portions, the heating and cooking are conducted at proper temperatures, and the container is prevented from being damaged.

In the heat-resistant laminated sheet of the invention, further, the silicon resin layer is thickly formed. In providing the electrically conducting sheet with cut lines for controlling the eddy current, therefore, it is allowed to easily so form the cut lines that the electrically conducting sheet is completely cut but the silicon resin layer is not completely cut.

Brief Description of the Drawings:

[Fig. 1] It is a schematic sectional view showing a laminar structure of a heat-resistant laminated sheet of the present invention.
[Fig. 2] It is a schematic side sectional view of a preferred embodiment of when the heat-resistant laminated sheet of Fig. 1 is used as a heat-generating sheet for IH heating and cooking.
[Fig. 3] It is a plan view of the heat-generating sheet of Fig. 2.
[Fig. 4] It is a bottom view of the heat-generating sheet of Fig. 2.
[Fig. 5] It is a half perspective view of a holder member on which the heat-generating sheet of Fig. 2 is placed.
[Fig. 6] It is a schematic sectional view illustrating a procedure for placing the heat-generating sheet of Fig. 2 on the holder member.
[Fig. 7] It is a half perspective view showing a state where the heat-generating sheet of Fig. 2 is placed on the holder member.
[Fig. 8] It is a perspective view showing a state where the heating and cooking are carried out by placing the heat-generating sheet of Fig.2 on the holder member.
[Fig. 9] It is a diagram illustrating the elemental composition ratios of three kinds of atoms of silicon atoms, oxygen atoms and carbon atoms in a silicone resin layer that favorably adheres to an electrically conducting sheet (aluminum foil), and illustrates a relationship between the depth of the silicone resin layer from the surface on the side of the electrically conducting sheet and the elemental composition ratios of the three kinds of atoms.
[Fig. 10] It is a diagram illustrating the elemental composition ratios of three kinds of atoms of silicon atoms, oxygen atoms and carbon atoms in a silicone resin layer that favorably adheres to the electrically conducting sheet (aluminum foil), and illustrates a relationship between the depth of the silicone resin layer from the surface thereof and the elemental composition ratios of the three kinds of atom.
[Fig. 11] It is a schematic sectional view showing another laminar structure of the heat-resistant laminated sheet of the present invention.
[Fig. 12] It is a reference view of steps for analyzing the composition of the silicone resin layer.

Modes for Carrying Out the Invention:

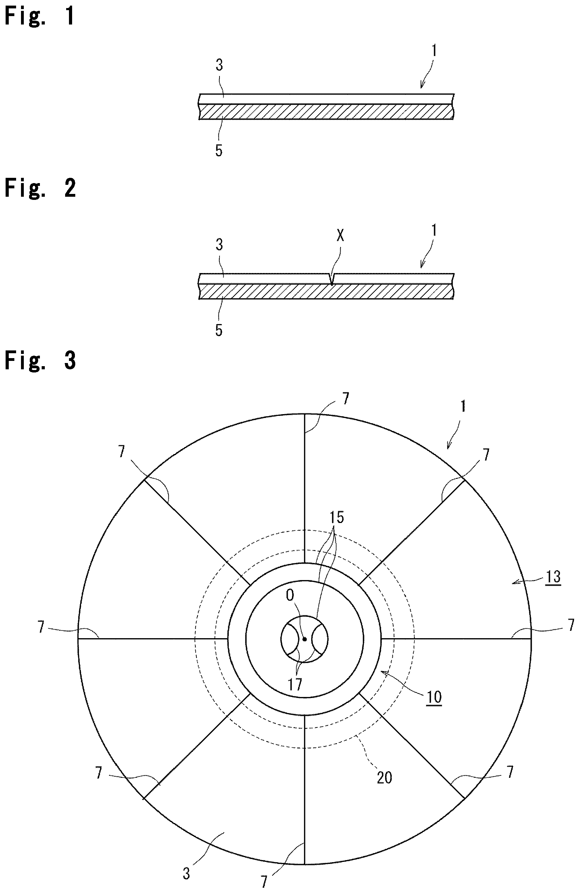

Referring to Fig. 1, a heat-resistant laminated sheet (generally designated at 1) of the present invention comprises an electrically conducting sheet 3 and a silicone resin layer 5.

The electrically conducting sheet 3 is made from a metal foil as represented by an aluminum foil. Here, for example, the laminated sheet 1 is placed on the inductively heating portion of an IH cooking device such that the silicone resin layer 5 is on the lower side, and the IH cooking device is operated so that heat is generated due to eddy currents induced by a high-frequency magnetic field.

The silicone resin layer 5 has higher heat resistance than that of the olefin resin, and is not thermally deformed despite the electrically conducting sheet 3 is heated at temperatures adapted to heating and cooking or is heated at higher temperatures.

In the invention, the silicone resin layer 5 has a thickness which is set to be not less than 20 $\mu$m or is set to lie in a range of, preferably, 20 to 1000 $\mu$m or, more preferably, 50 to 200 $\mu$m. That is, the silicone resin layer 5 is formed in such a large thickness. Therefore, despite the electrically conducting sheet 3 generates the heat, the silicone resin layer 5 that happens to come in contact with a lowly heat-resistant resin (thermoplastic resin container) works to effectively suppress the lowly heat-resistant resin from being thermally deformed.

If, for example, the thickness of the silicone resin layer 5 is smaller than the above thickness, only a decreased effect is obtained from the heat resistance of the silicone resin layer 5. Even if the thickness of the silicone resin layer 5 becomes unnecessarily large, on the other hand, no particularly distinguished effect is obtained but disadvantage results in cost. Besides, it becomes difficult to effectively adjust the temperature of the materials such as foodstuffs heated by the IH cooking device with the silicone resin layer 5 being interposed therebetween.

In the heat-resistant laminated sheet 1 of the present invention that is thickly forming the silicone resin layer 5 as described above, the electrically conducting sheet 3 can be easily provided with cut lines for controlling the eddy currents to adjust the heat that is inductively generated by the IH cooking device.

Fig. 2 shows, in cross section, an embodiment of the heat-resistant laminated sheet 1 used as a sheet for generating the heat by induction. In the laminated sheet 1, a cut line X is formed in the electrically conducting sheet 3 by cutting such as laser beam machining. The cut line X is for controlling eddy currents, i.e., for lowering or shutting off the eddy currents induced by a high-frequency magnetic field. The cut line X is so formed as to completely cut the electrically conducting sheet 3, and is penetrating through the electrically conducting sheet 3 in the direction of thickness thereof as shown in Fig. 2.

Here, the silicone resin having good heat resistance is a cured product of polyalkylsiloxane and has a dense structure with its SiO chain being branched. Usually, however, the silicone resin adheres poorly to the electrically conducting sheet 3 and its thickness cannot be easily increased. In a conventional laminate of an aluminum foil and a silicone resin layer, for example, the silicone resin has been thinly applied and has a considerably small thickness. The present inventors do not know any silicone resin layer 5 that is thickly formed like that of the present invention.

With the silicone resin layer 5 having a large thickness formed according to the present invention, however, distribution of carbon atoms has been adjusted in the direction of thickness so as to maintain adhesiveness to the electrically conducting sheet 3.

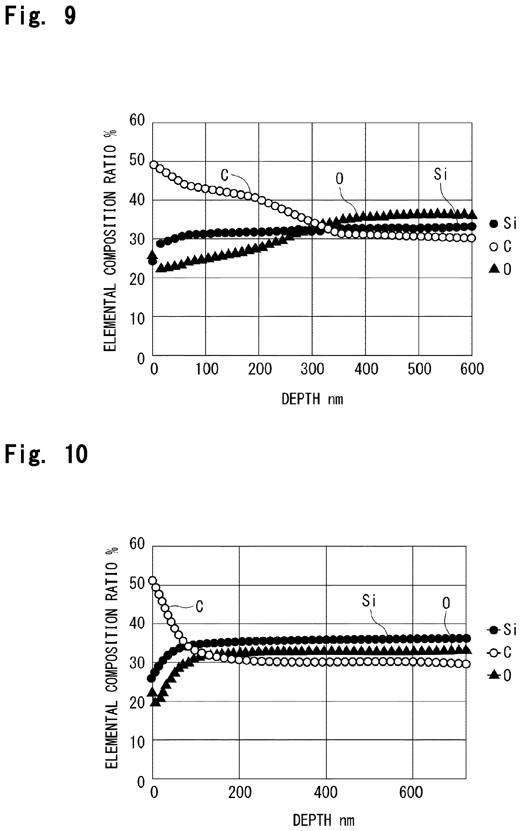

Figs. 9 and 10 are diagrams illustrating the elemental composition ratios of three kinds of atoms of silicon atoms, oxygen atoms and carbon atoms in the silicone resin layer 5 (150 $\mu$m in thickness) that favorably adheres to the electrically conducting sheet (aluminum foil) 3 as measured by using an XPS apparatus as will be demonstrated in Experimental Examples appearing later. In these diagrams, Fig. 9 illustrates a relationship between the depth of the silicone resin layer 5 from the surface on the side of the electrically conducting sheet 3 and the elemental composition ratios of the three kinds of atoms, and Fig. 10 illustrates a relationship between the depth of the silicone resin layer 5 from the surface thereof (surface on the side opposite to the electrically conducting sheet) and the elemental composition ratios of the three kinds of atom (as for details of the measuring method, refer to Examples).

It is considered that the measured results in Figs. 9 and 10 are affected by the impurities deposited on the surface of the silicone resin layer 5 and on the vicinities thereof. In these diagrams, therefore, attention is given to the elemental composition ratios at depths of not less than 100 nm from the surface of the silicone resin layer 5.

Figs. 9 and 10 tell that in the silicone resin layer 5 that favorably adheres to the electrically conducting sheet 3, the elemental composition ratio of carbon atoms is the highest (about 45%) at a depth of 100 nm on the side of the electrically conducting sheet 3, gradually decreases from the depth of about 100 nm to about 300 nm, and becomes about 30% and remains nearly constant at a depth of not less than 300 nm (Fig. 9). If measured from the surface on the side opposite to the electrically conducting sheet 3, on the other hand, the elemental composition ratio of carbon atoms becomes about 30% and remains nearly constant at the depth of not less than about 100 nm (Fig. 10) .

Namely, the above results tell that in the silicon resin layer 5 that has a good adhering property, the carbon atoms are present at a large ratio in the region close to the electrically conducting sheet 3, and are present at a small but constant ratio on the side opposite thereto.

In the heat-resistant laminated sheet 1 having the electrically conducting sheet 3 laminated on the silicone resin layer 5 in which the carbon atoms are distributed as described above, it is confirmed that the silicone resin layer 5 is firmly and closely adhered to the electrically conducting sheet 3.

On the other hand, if the silicone resin layer 5 that poorly adheres to the electrically conducting sheet (aluminum foil) 3 is measured for its elemental composition ratio of the three kinds of atoms of silicon atoms, oxygen atoms and carbon atoms in the same manner as described above, it is confirmed that the elemental composition ratio becomes the same as that of Fig. 10 described above irrespective of the measurement taken on the surface of either side. That is, the elemental composition ratio of the carbon atoms measured from the surface on the side of the electrically conducting sheet 3 becomes nearly the same as the elemental composition ratio of the carbon atoms measured from the surface on the side opposite to the electrically conducting sheet 3.

In the heat-resistant laminated sheet 1 having the electrically conducting sheet 3 laminated on the silicone resin layer 5 in which the carbon atoms are distributed as described above, it is confirmed that the silicone resin layer 5 easily peels off the electrically conducting sheet 3.

It is learned from the above experimental results that in order for the silicone resin layer 5 having a large thickness and the electrically conducting sheet 3 to stay favorably adhered to each other, it is desired that the carbon atoms are contained in the silicone resin layer 5 at a ratio larger on the side of the electrically conducting sheet 3 than on the side of the surface thereof.

The inventors have further forwarded experiments and measured the elemental composition ratios of carbon atoms. Namely, if represented on the basis of three elements of silicon atoms, oxygen atoms and carbon atoms, it is particularly desired that the silicone resin layer 5 has an elemental ratio of carbon CD represented by the following formula:

$$CD = C1/C2$$

wherein C1 is an elemental composition ratio (%) of carbon atoms in the silicon resin layer in a region of a depth of 100 to 300 nm from the surface thereof on the side of the electrically conducting sheet, and C2 is an elemental composition ratio (%) of carbon atoms in the silicon resin layer in a region of a depth of not less than 100 nm from the surface thereof,

of more than 1 from the standpoint of maintaining favorably adhering property to the electrically conducting sheet 3.

That is, the larger the elemental ratio of carbon CD, the larger the ratio of carbon atoms in the silicone resin layer 5 on the side of the electrically conducting sheet 3 than on the side of the surface thereof.

Here, calculation of the carbon distribution index CD excludes the elemental composition ratios of carbon atoms in the silicone resin layer 5 in a region of depths of 0 to 100 nm from the surface thereof. This is because in the surface of the silicone resin layer 5 and in the vicinities thereof, as described earlier, measured values of the elemental composition ratios are subject to be varied being greatly affected by the deposition of impurities.

In the present invention, it has been confirmed through experiments as described above that the carbon atoms are present in the silicone resin layer 5 at a ratio larger on the side of the electrically conducting sheet 3 than on the surface side thereof, though the reason for this has not been clarified yet. This, however, is presumed to be that the main chain of SiO bond is short in the silicone resin layer 5 on the side of the electrically conducting sheet 3. In the silicone resin layer 5, therefore, the amount of methyl groups becomes relatively larger on the side of the electrically conducting sheet 3 than on the surface side thereof, and the elemental composition ratio of carbon atoms increases. As shown in Fig. 9, further, the elemental composition ratio of carbon atoms in the silicone resin layer 5 on the side of the electrically conducting sheet 3 gradually approaches the elemental composition ratio of carbon atoms in the silicone resin layer shown in Fig. 10. It is, therefore, considered that there is formed the silicon resin layer 5 without interface exhibiting favorable adhesiveness.

The silicone resin layer 5 containing carbon atoms at a large ratio on the side of the electrically conducting sheet 3 can be formed, though not limited thereto only, by using, for example, a silicone coating material (solvent type coating material) containing much organic components (carbon atoms) for forming a silicone resin, and a silicone sheet of a large thickness formed by using a silicone resin that contains much organic components (carbon atoms) and much branching portions. That is, the silicone coating material is applied onto the electrically conducting sheet 3 (metal foil such as aluminum foil) and is suitably dried. Next, the silicone sheet is laminated by being pressed on the silicone-applied surface, and the laminate thereof is heated so that the silicone sheet is crosslinked. Thus the silicone resin (silicone-applied layer, that is, silicone resin on the side of interface) formed by applying the silicone and the silicone sheet are integrated together to thereby form the above-mentioned silicone resin layer 5.

The silicone coating material forms a region that contains the carbon component in a relatively large amount. Usually, the silicone coating material contains, as silicone components, a polyalkenylsiloxane that contains an alkenyl group such as vinyl group or allyl group and a polyalkylhydrogensiloxane that contains a SiH group. The silicone coating material, further, contains a catalyst of a metal of platinum Group (e.g., choloroplatinic acid etc.), an aromatic hydrocarbon solvent such as toluyene or xylene, an ester type solvent such as ethyl acetate, and a mixed solvent thereof. That is, the coating material is applied, suitably dried to remove the solvent and is heated, whereby the alkenyl group in the polyalkenylsiloxane reacts with the SiH group in the polyalkylhydrogensiloxane to introduce a crosslinked structure (branched structure) to form a silicone resin that has been cured. To adjust properties of the silicone resin, the silicone coating material may be suitably blended with a polyalkylsiloxane or the like that contains no functional group, such as polydimethylsiloxane or polyphenylmethylsiloxane.

The silicone sheet is formed by using a heat-resistant silicone resin which contains the organic component (carbon component) in an amount relatively smaller than that of the silicone resin (silicone resin on the side of the electrically conducting sheet) obtained by curing the silicone coating material. The silicone sheet forms a layer that includes the region on the surface side of the silicone resin layer 5.

The silicone sheet contains the organic compound in an amount smaller than that in the silicone resin on the side of the electrically conducting sheet. Therefore, the silicone sheet can be formed by any method so far as it contains much crosslinked structure (branched structure). From such a standpoint that the silicone sheet is formed integrally with the silicone resin on the side of the electrically conducting sheet, however, it is desired that the silicone sheet is the one formed by the reaction of the polyalkenylsiloxane with the polyalkylhydrogensiloxane that contains SiH group like the above silicone coating material.

That is, the silicone sheet is pressed onto the layer of the silicone coating material, and the laminate thereof is heated and crosslinked. In the interface between the two, the alkenyl group or the SiH group in the silicone coating material reacts with the SiH group or the alkenyl group remaining in the silicone sheet; i.e., the silicone resin on the side of the interface and the silicone sheet are formed being firmly integrated together.

A variety of means can be contrived to increase the amount of the organic component in the silicone resin formed by using the silicone coating material. The simplest means, however, is to use the above-mentioned polyalkenylsiloxane and the polyalkylhydrogensiloxane that have low molecular weights. That is, if the siloxane polymer is used in the same amount, the siloxane polymer having a short molecular chain makes it possible to increase the number of the molecular terminals to which the alkyl groups such as methyl groups are bonded in the greatest (three) number. As a result, the amount of the organic component (carbon atoms) can be increased.

By using the polyalkenylsiloxane or the polyalkylhydrogensiloxane of a high molecular weight, on the other hand, the amount of the organic component (carbon atoms) can be decreased in the silicone sheet.

By suitably selecting the molecular weight of the siloxane polymer that is used, therefore, it is allowed to set the carbon distribution index CD of the formed silicone resin layer 5 to lie in a predetermined range.

If the silicone resin layer 5 is to be formed by using the silicone coating material and the silicone sheet as described above, in general, the silicone coating material is applied on the electrically conducting sheet 3 in a dry thickness of about 0.05 to about 2.0 $\mu$m, and the thickness of the silicone sheet is so set that the thickness of the silicone resin layer 5 on which the silicone sheet is laminated integrally together is not less than 20 $\mu$m and is, preferably, 20 to 1000 $\mu$m and, more preferably, 50 to 200 $\mu$m.

The heat-resistant laminated sheet 1 of the present invention obtained by forming the silicone resin layer 5 of a large thickness on the electrically conducting sheet 3 makes it possible to easily form the cut line X in the electrically conducting sheet 3, and can be particularly preferably used as a heat-generating sheet for IH cooking.

In the heat-resistant laminated sheet 1, the silicone resin layer 5 is favorably adhered and fixed to the electrically conducting sheet 3. Even without forming the cut line X, therefore, the heat-resistant laminated sheet 1 can be used in its form or can be formed into a bag-like container to pack various foodstuffs in a manner that the foodstuffs are in contact with the silicone resin layer 5. The pack can then be heated and cooked in a heated oven or in a microwave oven offering such an advantage that the foodstuffs do not adhere to the electrically conducting sheet such as aluminum foil.

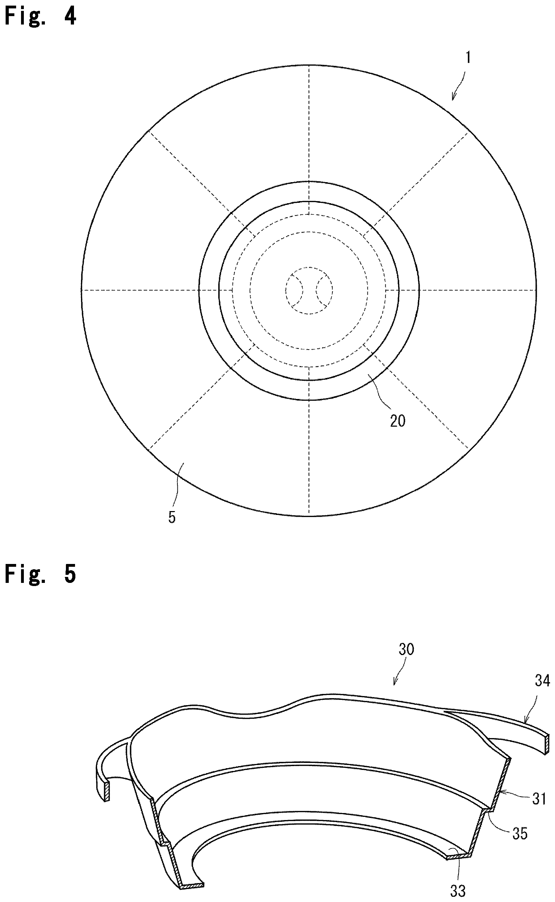

In the invention, the cut lines X are formed as shown in Fig. 2. The heat-resistant laminated sheet 1 is used as a heat-generating sheet for IH heat-cooking devices. As shown in Figs. 3 and 4, the heat-resistant laminated sheet 1, usually, assumes a circular shape. The heat-resistant laminated sheet 1 is folded in the shape of a container and, as shown in Figs. 5 to 7, is used being placed on the inductively heating portion of the IH cooking device in a state of being held on a dielectric holder member 30.

The electrically conducting sheet 3 of the heat-generating sheet 1 has cut lines X formed in various shapes to adjust the eddy currents induced by the inductive heating of the IH cooking device. The cut lines are designated at 7, 15 and 17. That is, to adjust the eddy currents generated by the inductive heating, the cut lines are linearly formed so as to completely shut off the induction of eddy currents in the electrically conducting sheet 3 yet leaving the silicone resin layer 5. As described earlier, the cut lines are formed by a known means such as laser beam machining.

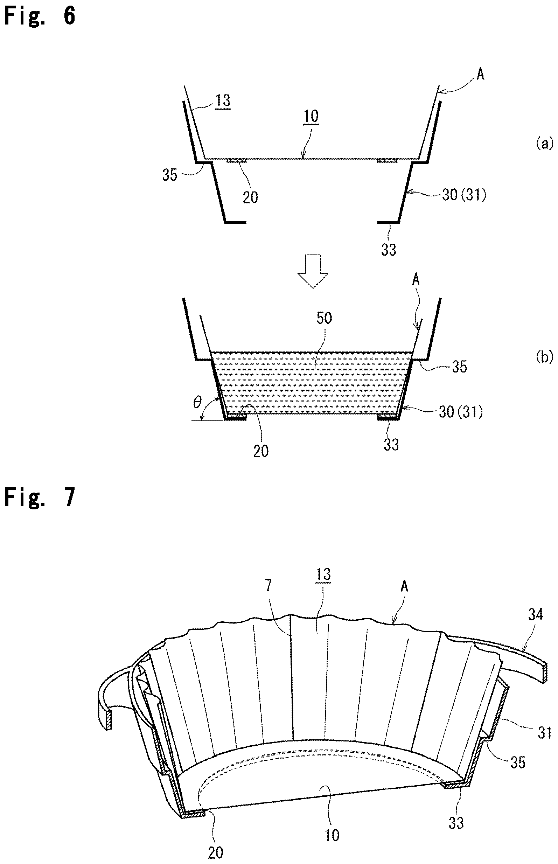

The heat-generating sheet 1, usually, is in a circular shape as a whole. Upon being folded, the heat-generating sheet 1 forms a container having a bottom 10 and a circumferential side wall 13, the surface thereof on the side of the electrically conducting sheet 3 being the inner surface (see Figs. 6 and 7) . The container thus formed has a size nearly the same as that of general household pans that are used for boiling and cooking.

In the portion that becomes the circumferential side wall 13 of the container that is formed upon being folded, there are formed a number of first cut lines 7 maintaining a suitable and equal distance and radially extending starting from a portion that becomes the center O in the bottom 10 (see Fig. 3). The first cut lines 7 make it possible not only to lower or shut off the induction of eddy currents flowing in the circumferential side wall 13 of the container formed by being folded, to prevent the circumferential side wall 13 from being excessively heated and to conduct the heating and cooking (boiling and cooking) at proper temperatures but also to effectively prevent the silicone resin layer 5 formed in the circumferential side wall 13 and the dielectric holder member 30 in contact with the circumferential side wall 13 from being damaged by the heating.

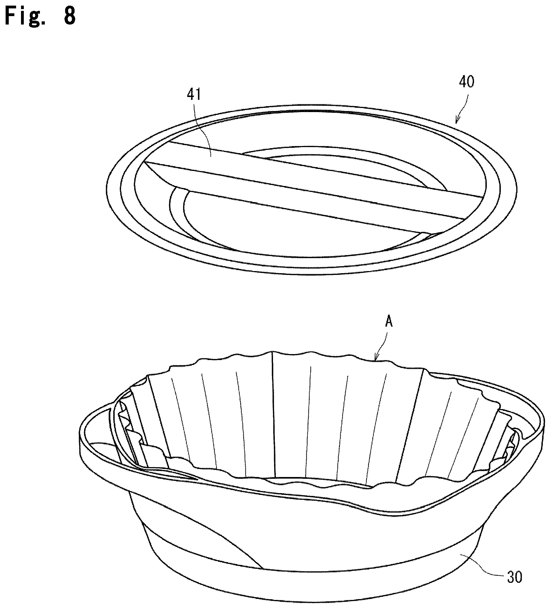

Further, the portion that becomes the circumferential side wall 13 of the heat-generating sheet 1 is, for example, folded to form the container in a stable form thereby avoiding the surface contact between the circumferential side wall 13 of the container and the holder member 30 and more effectively preventing the holder member 30 from being damaged by the heating (see Figs. 7 and 8).

Though not specifically limited, the first cut lines 7 are, usually, provided in a number of not less than 2 and, preferably, 3 to 40. The number, however, may be suitably determined depending on the size of the container that is formed by being folded and is heated so as to lower or shut off the induction of eddy currents generated by the inductive heating. The cut lines 7 are radially extending in the embodiment of Figs . 3 and 4. The cut lines 7, however, can be formed in a curved shape or in any other shape provided the induction of eddy currents can be lowered or shut off.

Referring to Fig. 3, further, it is desired to form a plurality of concentric and endless second cut lines 15 around the center O of the bottom 10 of the container thus formed. That is, the endless cut lines 15 work to confine, in each of the regions, the eddy currents flowing in the electrically conducting sheet 3 in the portion corresponding to the bottom 10 of the container formed by being folded, to prevent the local generation of heat in the bottom portion 10, and to offer advantage in conducting the heating and cooking at proper temperatures. There may be provided several such endless second cut lines 15 though there is no specific limitation on the number thereof.

As will be understood from Figs. 3 and 4, further, it is desired that the first cut lines 7 are extending up to the position of the second cut line 15 of the largest diameter. This makes it possible to prevent the eddy currents induced in the bottom 10 from flowing into the circumferential side wall 13 and to reliably prevent the generation of heat to an excess degree in the circumferential side wall 13.

As shown in Fig. 3, further, third cut lines 17 are formed in a region surrounded by the cut line 15 of the smallest diameter which is one of the plurality of endless second cut lines 15, the third cut lines 17 extending up to the position of the smallest second cut line 15. That is, the third cut lines 17 work to lower or shut off the eddy currents induced in the central portion of the bottom 10 and to effectively prevent the eddy currents from flowing in the central portion of the bottom 10 at the time of heating and cooking (boiling and cooking).

The third cut lines 17 should stretch in a direction in which the induced eddy currents are lowered or shut off, i.e., should stretch up to the position of the endless second cut line 15. In Fig. 3, for example, the third cut lines 17 are formed in an arcuate shape but may be linearly formed like a so-called cross cut. There is no limitation on the number thereof, either.

In the heat-generating sheet 1 of the invention described above, further, a reinforcing ring 20 can be suitably formed on the surface of the silicone resin layer 5 (i.e., on the back surface of the heat-generating sheet 1) formed on the back side of the electrically conducting sheet 3 at a portion corresponding to the circumferential edge of the bottom 10 of the container that is formed by being folded. By forming the reinforcing ring 20, the shape of the container formed by folding the heat-generating sheet 1 can be maintained more stably.

The reinforcing ring 20 is formed by using a dielectric material, as a matter of course. It is, however, desired that the reinforcing ring 20 is formed by using the silicone resin so as to be firmly adhered and fixed to the silicone resin layer 5. It is, however, also allowable to provide a reinforcing ring 20 by sticking a ring formed by using an olefin resin such as polypropylene or a paper material such as carton via a suitable adhesive.

The thickness and width of the reinforcing ring 20 may be set to lie in suitable ranges such that the container formed by being folded stably maintains its shape.

The heat-generating sheet 1 is used in combination with the holder member 30 of a shape shown in Fig. 5 to 7.

In these drawings, the container formed by folding the heat-generating sheet 1 is designated at A.

In the invention, the holder member 30 is formed by using a dielectric material but should desirably be formed by using the silicone resin from the standpoint of heat resistance.

The holding member 30 comprises an annular wall 31 of a tapered shape having a large diameter at the upper end thereof and having a diameter that is decreasing downward. A circumferential flange 33 is formed at the lower end of the annular wall 31 to protrude inward, and a handle 34 is formed at the upper end thereof.

The container A formed by using the heat-generating sheet 1 of the invention is subjected to the heating and cooking by using the IH cooking device in a state where it is held in the annular wall 31 of the holder member 30 and is stably held therein. Here, the annular wall 31 has a size that is so set that the container A can be just fitted therein.

It is, further, desired that an inwardly protruding circumferential stepped portion 35 is formed on the inner surface of the annular wall 31 at a suitable position thereof, for example, at a central portion in the direction of height of the annular wall 31 or, though not shown, at an intermediate portion between the central portion and the upper end, or an intermediate portion between the central portion and the lower end.

Referring to Fig. 6(a), the container A formed by folding the heat-generating sheet 1 is inserted in the annular wall 31. Here, in an empty state, the circumferential edge portion of the bottom 10 of the container A is hooked by the circumferential stepped portion 35, stays there and does not falling down. In this state, therefore, despite the holder member 30 holding the container A is placed on the inductively heating portion of the IH cooking device, the bottom 10 of the container A made from the heat-generating sheet 1 does not generate the heat since it is remote from the IH cooking device, and so-called empty heating is prevented.

Next, if the materials 50 to be heated, such as water and foodstuffs to be cooked are thrown into the container A in the state of Fig. 6(a), the container A falls down from the circumferential stepped portion 35 due to the weight and the bottom portion 10 is supported by the inner flange 33 of the holder member 30 (see Figs. 6(b) and 7). In this state, the materials 50 to be heated are heated and cooked (boiled and cooked) being inductively heated by the IH heat-cooking device .

Here, as shown in Fig. 6(b), the taper angle $\theta$ of the annular wall 31 at the lower part of the circumferential stepped portion 35 is, desirably, about 30 to about 90 degrees and, more desirably, about 60 to about 80 degrees from such a standpoint that the container A into which the materials 50 to be heated are thrown can be quickly fallen down. As will be understood from Figs. 6 (a) and 6 (b), further, it is desired that the outer dimeter of the reinforcing ring 20 formed on the bottom 10 of the container A is set to be slightly smaller than the diameter of the circumferential stepped portion 35 also from the standpoint that the container A into which the materials 50 to be heated are thrown can be quickly fallen down.

To carry out the heating and cooking, a lid member 40 is used together with the holder member 30 as shown in Fig. 8. Like the holder member 30, the lid member 40, too, is made from a dielectric material and, specifically, a thermoplastic resin.

At the time of heating and cooking the materials 50 that are to be heated, the lid member 40 is used as a pan lid. After the heating and cooking, however, the lid member 40 is turned upside down aid is used as a pan stand. By using the lid member 40 as the pan stand, the heat of the bottom 10 (heat-generating sheet 1) of the container A exposed in the inner flange 33 of the holder member 30 can be blocked after the heating and cooking have been finished. Further, by employing a suitable constitution which enables the lid member 40 to be fitted in the inner flange 33 of the holder member 30, it is allowed to place the container A containing the cooked materials 50 and the holder member 30 in a stable state, or to transport them in a stable state by holding the lid member 40. Referring, for example, to the lidmember 40 shown in Fig. 8, the central portion 41 that is protruding downward as a result of being turned upside down, can be fitted in the inner flange 33 of the holder member 30 and can be used as a pan stand.

Here, neither Fig. 7 nor Fig. 8 is showing the materials 50 to be heated being thrown into the container A.

As will be understood from the foregoing description, the lower end of the annular wall 31 forming the holder member 30 has not been closed with the bottom wall, but is simply forming the inner flange 33 for supporting the circumferential edge of the bottom 10 of the container A. Therefore, a majority portion of the bottom 10 of the container A is not in contact with the holder member 30, though the bottom portion 10 of the container A generates the heat due to eddy currents induced by the inductive heating of the IH heat-cooking device. Besides, upon forming the first cut lines 7 in the circumferential side wall 13 of the container A, induction of the eddy currents can be lowered or shut off to suppress the generation of heat. Therefore, the side wall of the holder member 30 is not heated at high temperatures. Accordingly, the holder member 30 is effectively prevented from being thermally deformed by the heat generated in the container A (heat-generating sheet 1).

Further, the reinforcing ring 20 is formed along the circumferential edge on the bottom 10 of the container A. Therefore, despite the materials 50 to be heated such as water and the like for being boiled and cooked are thrown into the container A, there occurs no such inconvenience that the container A is dented by the weight of the materials 50 be heated. The shape of the container A, therefore, is stably maintained.

In the invention, if the reinforcing ring 20 has too large thickness or if the inner flange 33 has too large thickness in a state where the bottom 10 of the container A is held by the inner flange 33 of the holder member 30, then the distance becomes too large between the electrically conducting sheet 3 of the bottom 10 and the inductively heating portion of the IH cooking device, eddy currents are not effectively induced, and heat is not generated to a sufficient degree. Therefore, their thicknesses are so set that the distance between the bottom 10 of the container A and the inductively heating portion of the IH cooking device lies in a range in which eddy currents can be effectively induced to generate the heat.

In the foregoing was described the heat-generating sheet 1 of the invention in a circular shape. The heat-generating sheet 1, however, may be of a rectangular shape. Further, the endless second cut lines 15 formed in the bottom 10 may also be of the rectangular shape. The annular wall 31 of the holder member 30, too, may be of a rectangular planar shape.

Instead of folding the heat-generating sheet 1 into the container A to fit to the holder member 30, it is also allowable to form the container A by forming the folding lines in the heat-generating sheet 1 and to hold the container A in the annular wall 31 of the holder member 30. In this case, a multiplicity of pieces of the heat-generating sheet 1 forming the folding lines or the containers A in the folded state are compactly stacked up, and are placed in the market for sale.

The container A formed by using the heat-resistant laminated sheet 1 (heat-generating sheet) of the invention is simply placed on the holder member 30 but is not adhered or fixed by heat-sealing or the like means. The heat-generating sheet 1, therefore, can be discarded after the heating and cooking. For the heating and cooking in the next time, the container A is newly formed by using the heat-generating sheet 1. That is, a set of the heat-generating sheet 1, the holder member 30 and the lid member 40 is sold as a heating-cooking set for boiling and cooking with the IH cooking device. The heat-generating sheet 1 itself can be discarded after the heating and cooking, and the new heat-generating sheet 1 is used for every cooking. Every compact stack of a multiplicity of pieces of the heat-generating sheet 1 is suited for being placed in the market for easy and convenient sale.

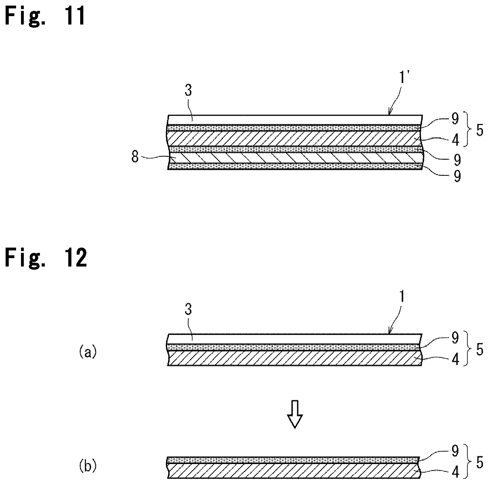

Fig. 11 is a schematic sectional view showing another laminar structure of the heat-resistant laminated sheet of the present invention. Like the above-mentioned heat-resistant laminated sheet 1, the heat-resistant laminated sheet 1' includes the electrically conducting sheet 3 and the silicone resin layer 5 and, further, includes a heat-resistant paper (oven paper) or the like that is laminated on the silicone resin layer 5. The heat-resistant paper (oven paper) has silicone layers formed on the front and back surfaces thereof by applying the silicone coating material on the surfaces thereof followed by drying.

For adhering them together, a heat-resistant paper 8 having silicone-applied layers 9 is laminated and is pushed on the silicone resin layer 5 of a laminate. The laminate includes the electrically conducting sheet 3, the silicone-applied layer 9 formed by applying the silicone coating material and the silicone seat 4. They are integrally laminated together, followed by heating so as to be crosslinked. There is thus formed a heat-resistant laminated sheet 1'.

Here, the adhesion is not limited to the above embodiment only. For instance, the silicone sheet 4 laminated on the heat-resistant paper 8 is laminated and pushed onto the silicon-coated layer 9 formed on the electrically conducting sheet 3, followed by heating so as to be cross-linked. The silicone resin 9 formed by applying the silicone and the silicone sheet 4 are thus integrally formed together to form the heat-resistant laminated sheet 1' having the silicone resin layer 5 adhered to the electrically conducting sheet 3. Thus the form of adhesion is not specifically limited.

By forming the heat-resistant laminated sheet 1' by using the heat-resistant paper 8 that has the silicone-applied layers 9 on the front and back surfaces thereof, further improved heat resistance is obtained due also to the silicone resin layer 5 that is thickly formed as described above. Despite heat is generated by the electrically-conducting sheet 3 and even if the heat-resistant paper 8 comes in contact with the resin (thermoplastic resin container) having a small heat resistance, the resin (thermoplastic resin container) is more effectively suppressed from being thermally deformed.

As for the heat-resistant paper 8 having the silicone-applied layers 9, the paper material which is the heat-resistant paper, usually, has a thickness of about 5 to about 100 $\mu$m, the silicone coating material on the back and front surfaces has a thickness of about 0.05 to about 2.0 $\mu$m in a dry state, and the heat-resistant paper 8 forming the silicone-applied layers 9 on the front and back surfaces thereof has a thickness of about 5.05 to about 102 $\mu$m.

Here, the silicon-coated layer 9 formed on the heat-resistant paper 8 may be only on the side of the silicone resin layer 5.

EXAMPLES

The invention will now be described by way of the following Experimental Examples.

In the following Experimental Examples, the silicone resin layers formed on the aluminum foil were elementally analyzed for their compositions, and their carbon distribution indexes CD were calculated by the methods described below.

1. Analysis of composition of the silicone resin layer;

Referring to Fig. 12, from a sample heat-resistant laminated sheet 1 (heat-generating sheet) obtained by laminating the silicone resin layer 5 on the aluminum foil 3 (Fig. 12(a)), the aluminum foil 3 was dissolved with an acid and was removed (Fig. 12(b)). By using an XPS apparatus, the silicone resin layer 5 was elementally analyzed for its composition in the direction of depth on the side of the aluminum foil 3 and on the surface on the opposite side thereof under the following conditions. The abscissa represents the depths from the surface, and the ordinate represents the elemental composition ratios of three elements of silicon atoms (Si), oxygen atoms (O) and carbon atoms (C).

2. Measuring conditions;

XPS apparatus: K-Alpha manufactured by Thermofisher Scientific Co.
Source of ray: Al monochrometer
Range of measurement: 0.2 mm $\phi$
Sputtering: Argon monomer
Sputtering conditions: 2 kV, high mode
Sputter rate, 8.2 nm/min (calculated as $SiO_2$) Time per level, 20 seconds Number of levels, 30 times

3. Calculating the elemental ratio of carbons CD.

In analyzing the compositions, the elemental composition ratios of carbon atoms in the silicone resin layer were measured in a region of a depth of 0 to 600 nm from the surface on the side of the aluminum foil and in a region of a depth of 0 to 700 nm from the surface thereof by using the XPS apparatus.

Next, from the elemental composition ratios of carbon atoms, there were found an elemental composition ratio C1 of carbon atoms in a region of a depth of 100 to 300 nm from the surface of the silicone resin layer on the side of the electrically conducting sheet excluding the region of a depth of not more than 100 nm that is greatly affected by the deposition of impurities and an elemental composition ratio C2 of carbon atoms in a region of a depth of not less than 100 nm from the surface of the silicone resin layer.

An elemental ratio of carbons CD (C1/C2) was calculated from the above results.

4. Coating material for forming the silicone resin layer on the aluminum foil.

A coating material obtained by dissolving in toluene a mixture (containing catalyst) of a polyalkenylsiloxane and a polyalkylhydrogensiloxane at a solid component concentration of 30% by mass.

<Experiment 1>

The above silicone coating material was applied onto an aluminum foil (10 $\mu$m in thickness) and was dried to form a silicone film of a thickness of 0.3 $\mu$m.

Next, on the above silicone film, there were pressed and laminated, by using a laminate roll, a silicone sheet of a thickness of 150 $\mu$m formed by using a polyalkenylsiloxane and a polyalkylhydrogensiloxane having molecular weights larger than those used for the above silicone coating material, and the laminate thereof was heated so as to be crosslinked. Next, from the laminate, the aluminum foil was dissolved with an acid and was removed. The silicone resin layer of the laminate was analyzed for its composition by the above-mentioned method by using the XPS apparatus. Fig. 9 shows the analytical results of the silicone resin layer on the side of the aluminum foil and Fig. 10 shows the analytical results of the silicone resin layer on the surface side thereof. The elemental ratio of carbons CD calculated from the analytical results was 1.5.

In the laminate, further, the silicone resin layer had been firmly adhered to the aluminum foil.

<Experiment 2>

A silicone resin layer having a thickness of 150 $\mu$m was formed in the same manner as in Experiment 1 but using the silicone sheet only without forming the silicone-applied layer.

The silicone resin layer (silicone coating) was pressed and laminated on an aluminum foil (10 $\mu$m in thickness) by using a laminate roll. The silicone resin layer, however, peeled off.

Description of Reference Numerals:

> 1, 1': heat-resistant laminated sheets (heat-generating sheets)
> 3: electrically conducting sheet
> 5: silicone resin layer
> 8: heat-resistant paper
> 9: silicone-applied layers
> 10: bottom
> 13: circumferential side wall
> 15: endless cut lines
> 17: shut-off cut lines
> 20: reinforcing ring
> 30: holder member
> 31: annular wall
> 33: inner flange
> 35: circumferential steped portion
> A: container

**Claims**

1. A heat-resistant laminated sheet including an electrically conducting sheet and a silicone resin layer of a thickness of not less than 20 $\mu$m formed on one surface of said electrically conducting sheet.

2. The heat-resistant laminated sheet according to claim 1, wherein said silicon resin layer contains carbon atoms at a ratio that is larger in a region on the side of an interface to said electrically conducting sheet than in a region on the side of the surface thereof.

3. The heat-resistant laminated sheet according to claim 1, wherein, if represented on a basis of three elements of silicon atoms, oxygen atoms and carbon atoms, said silicone resin layer has an elemental ratio of carbons CD represented by a following formula:

$$CD = C1/C2$$

wherein C1 is an elemental composition ratio (%) of carbon atoms in said silicon resin layer in a region of a depth of 100 to 300 nm from the surface thereof on the side of the electrically conducting sheet,
and C2 is an elemental composition ratio (%) of carbon atoms in said silicon resin layer in a region of a depth of not less than 100 nm from the surface thereof,

of more than 1.

4. The heat-resistant laminated sheet according to claim 1, wherein said silicone resin layer has a thickness of 50 to 200 $\mu$m.

5. The heat-resistant laminated sheet according to claim 1, wherein said heat-resistant laminated sheet is used as a heat-generating sheet for use with the IH cooking devices.

6. The heat-resistant laminated sheet according to claim 1, wherein said electrically conducting sheet is provided with cut lines penetrating through in the direction of thickness of said sheet for controlling eddy currents.

7. The heat-resistant laminated sheet according to claim 1, wherein said silicon resin layer includes a silicone sheet and a silicone-applied layer which is formed on the side of said electrically conducting sheet.

8. The heat-resistant laminated sheet according to claim 7, wherein a paper material is adhered to the silicone-applied layer of said silicon resin layer.

Fig. 1

Fig. 2

Fig. 3

## Fig. 4

## Fig. 5

Fig. 6

(a)

(b)

Fig. 7

# Fig. 8

# Fig. 9

# Fig. 10

Fig. 11

Fig. 12

(a)

⇩

(b)

## EP 3 281 787 A1

**INTERNATIONAL SEARCH REPORT**

International application No.

PCT/JP2016/054150

**A. CLASSIFICATION OF SUBJECT MATTER**
*B32B27/00*(2006.01)i, *A47J27/00*(2006.01)i, *H05B6/12*(2006.01)i

According to International Patent Classification (IPC) or to both national classification and IPC

**B. FIELDS SEARCHED**

Minimum documentation searched (classification system followed by classification symbols)
B32B15/08, B32B27/00, A47J27/00, H05B6/12

Documentation searched other than minimum documentation to the extent that such documents are included in the fields searched
Jitsuyo Shinan Koho        1922–1996   Jitsuyo Shinan Toroku Koho    1996–2016
Kokai Jitsuyo Shinan Koho   1971–2016   Toroku Jitsuyo Shinan Koho    1994–2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2011-148263 A  (Fine Rubber Laboratories Co., Ltd.),<br>04 August 2011 (04.08.2011),<br>claims 1, 4, 8; paragraphs [0036], [0037], [0085] to [0088], [0132]<br>(Family: none) | 1-4,7<br>5,6,8 |
| X<br>A | JP 2013-184298 A  (Asahi Rubber Corp.),<br>19 September 2013 (19.09.2013),<br>claim 1; paragraph [0075]<br>(Family: none) | 1,4<br>2,3,5-8 |
| X<br>A | JP 11-197594 A  (Denki Kagaku Kogyo Kabushiki Kaisha),<br>27 July 1999 (27.07.1999),<br>claim 1; paragraph [0023]<br>(Family: none) | 1,4<br>2,3,5-8 |

| ☒ | Further documents are listed in the continuation of Box C. | ☐ | See patent family annex. |

\*    Special categories of cited documents:
"A"  document defining the general state of the art which is not considered    to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search<br>    21 April 2016 (21.04.16) | Date of mailing of the international search report<br>    10 May 2016 (10.05.16) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2016/054150

C (Continuation).    DOCUMENTS CONSIDERED TO BE RELEVANT

| Category* | Citation of document, with indication, where appropriate, of the relevant passages | Relevant to claim No. |
|---|---|---|
| X<br>A | JP 2010-219290 A  (Shin-Etsu Chemical Co., Ltd.),<br>30 September 2010 (30.09.2010),<br>claims 1, 3; paragraph [0024]<br>(Family: none) | 1,4<br>2,3,5-8 |
| X<br>A | JP 6-291226 A  (Denki Kagaku Kogyo Kabushiki Kaisha),<br>18 October 1994 (18.10.1994),<br>claims 1, 2; paragraph [0015]<br>(Family: none) | 1<br>2-8 |
| X<br>A | JP 2012-37173 A  (Sun Wave Corp.),<br>23 February 2012 (23.02.2012),<br>claim 1; paragraph [0023]<br>(Family: none) | 1<br>2-8 |
| A | WO 2005/021673 A1  (Yushi-Seihin Co., Ltd.),<br>10 March 2005 (10.03.2005),<br>entire text<br>& US 2007/0027241 A1    & EP 1659162 A1<br>& KR 10-2006-0121844 A  & CN 1845976 A | 1-8 |
| A | JP 3129837 U  (Giken Process Yugen Kaisha),<br>14 February 2007 (14.02.2007),<br>entire text; all drawings<br>(Family: none) | 1-8 |
| A | JP 7-20119 U  (Niitaka Chemical Industry Co., Ltd.),<br>11 April 1995 (11.04.1995),<br>entire text; all drawings<br>(Family: none) | 1-8 |
| A | JP 3188674 U  (Asahi Kasei Home Products Corp.),<br>08 January 2014 (08.01.2014),<br>entire text; all drawings<br>(Family: none) | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014086539 A
- JP 2003265312 A
- JP 2006192744 A
- JP 2002326691 A
- JP 2014239852 A